# EUROPÄISCHE PATENTSCHRIFT

(11) **EP 3 794 942 B1**
(45) Veröffentlichungstag und Bekanntmachung des Hinweises auf die Patenterteilung: **30.08.2023**
(21) Anmeldenummer: 20196788.2
(22) Anmeldetag: 18.09.2020
(51) Int. Cl.: A01M 7/00

(54) **VORRICHTUNG ZUR PFLANZENSCHUTZMITTEL-APPLIKATION**
DEVICE FOR THE APPLICATION OF PLANT PROTECTION PRODUCTS
DISPOSITIF POUR L'APPLICATION DE PRODUITS PHYTOPHARMACEUTIQUES

(30) Priorität: 19.09.2019 DE 102019125283; 06.07.2020 DE 102020117738
(43) Veröffentlichungstag der Anmeldung: 24.03.2021
(73) Patentinhaber: ETO GRUPPE TECHNOLOGIES GmbH, 78333 Stockach (DE)
(72) Erfinder: DITTUS Axel, 88046 Friedrichschafen (DE); STEINHAUSER Robert, 88046 Friedrichshafen (DE)
(74) Vertreter: Daub, Thomas

(56) Entgegenhaltungen:
- WO-A1-2010/108221
- CN-B- 105 454 201
- DE-A1- 3 237 793
- FR-A1- 2 719 970
- US-A- 6 152 382

## Beschreibung

### Technisches Gebiet

Die Erfindung betrifft eine Vorrichtung zur Pflanzenschutzmittel-Applikation nach dem Oberbegriff des Anspruchs 1.

### Stand der Technik

Derartige Pflanzenschutzmittel-Applikations-Vorrichtungen sind bereits in vielfältiger Form und Ausgestaltung bekannt und gebräuchlich. So wird beispielsweise in der DE 10 2006 012 504 A1 ein Verfahren und eine Vorrichtung zur optimierten Ausbringung von Pflanzenschutzmitteln offenbart. Dazu wird eine Aufsattelspritze oder Anhängespritze mit einem Fahrzeug genutzt. Die Spritzeinrichtung fährt dabei durch pflanzliche Reihenkulturen, wie Obst-, Weinbau- oder Hopfenplantagen, wobei während des Ausbringens von Pflanzenschutzmittel Orts-bzw. Positionsdaten bestimmt und ermittelt werden bezogen auf die Orts-und Positionsdaten, die Windrichtung, Windstärke sowie die Menge und die Richtung, in welche das Pflanzenschutzmittel gegenüber dem Fahrzeug ausgebracht wird. Diese Daten werden permanent bestimmt, geregelt und abgespeichert.

Weitere gattungsgemäße Vorrichtungen zur Pflanzenschutzmittel-Applikation sind ebenfalls aus der US 6 152 382 A, der WO 2010/108221 A und der DE 32 37 793 A1 bekannt.

### Aufgabe der Erfindung

Die Aufgabe der vorliegenden Erfindung ist es, die Nachteile aus dem Stand der Technik zu überwinden. Insbesondere soll eine Vorrichtung zur Pflanzenschutzmittel-Applikation bereitgestellt werden, bei welcher unnötiger Einsatz von Pflanzenschutzmittel verhindert wird und stattdessen ein zielgerichteter Einsatz von nur der tatsächlich benötigten Menge an Pflanzenschutzmittel erreicht wird. Weiterhin soll eine optimale Lüftereinstellung erzielt werden, um ebenfalls zu verhindern, dass Sprühchemie über die Struktur hinaus versprüht wird. D.h. ein Abdrift soll verhindert bzw. reduziert werden.

### Lösung der Aufgabe

Zur Lösung der Aufgabe führen die Merkmale nach dem Anspruch 1. Vorteilhafte Ausgestaltungen sind in den Unteransprüchen beschrieben.

Erfindungsgemässe Vorrichtungen kommen in der Regel an Fahrzeugen bzw. Fahrzeuganhängern zum Einsatz. Jede der erfindungsgemässen Vorrichtungen weist dabei eine Pflanzenschutzmittel-Zuführung, eine Ausbringdüse und eine Luftzuführung als Teil eines Düsengehäuses auf, wobei ausserdem ein Lüfter vorhanden ist, welcher in dem Düsengehäuse vorgesehen ist. Das benötigte Pflanzenschutzmittel kommt aus einem Pflanzenschutzmittel-Behälter.

Weiter kommen in der Regel mehrere Vorrichtungen zum Einsatz, die nebeneinander, also horizontal und/oder übereinander also vertikal angeordnet sind.

Die Vorrichtung weist dabei das Düsengehäuse auf, wobei das Düsengehäuse die Ausbringdüse und die Luftzuführung aufweist. Weiterhin ist in dem Düsengehäuse der Lüfter angeordnet. Der erfindungsgemässe Lüfter ist ein herkömmlicher Fahrzeuglüfter mit einem Durchmesser von 100 bis 500 mm bzw. einem Umfang von 300 bis zu 1600 mm. Der Lüfter ist zwischen der Luftzuführung und der Ausbringdüse angeordnet.

Der Umstand, dass alle wesentlichen technischen Merkmale innerhalb eines Düsengehäuses angeordnet sind und es sich bei dem genutzten Lüfter um einen herkömmlichen Fahrzeuglüfter handelt, führt zu einer erheblichen Kostenreduzierung und einer kompakten Bauweise. Bei den Fahrzeuglüftern handelt es sich um Kühllüfter für Fahrzeuge jeder Art. Insbesondere kann es sich um einen Fahrzeuglüfter aus einem Personenkraftwagen, einem Lastkraftwagen oder einem anderen motorisierten Fortbewegungsmittel handeln. Solche Fahrzeuglüfter dienen zur Abkühlung eines wärmeerzeugenden Antriebs mittels Flüssigkeiten. Üblicherweise kommen diese Lüfter nicht für den in dieser Erfindung beschriebenen Einsatz nicht in Frage. Sie erzeugen nicht genug Luftstrom.

Die im Stand der Technik bisher genutzten Lüfter wiesen alle einen erheblichen grösseren Durchmesser auf, da sie in der Regel auch mit einem Lüfter mehrere Düsen bedient haben. Dies resultiert aus dem Umstand, dass im Stand der Technik davon ausgegangen wird, man benötige einen großen Luftstrom, um entsprechende Mengen an Pflanzenschutzmittel ausbringen zu können. Dieses System wird durch die Schaffung der erfindungsgemässen Vorrichtung erneuert.

In einer weiteren erfindungsgemäßen Vorrichtung zur Pflanzenschutzmittel-Applikation, welche ebenfalls aus einer Pflanzenschutzmittel-Zuführung, einer Ausbringdüse und einer Luftzuführung, sowie eines Düsengehäuses und einem Lüfter mit einer Lüfternabe besteht, ist an dem Lüfter einerseits die Luftzuführung und andererseits das Düsengehäuse angeordnet.

Das Düsengehäuse besteht aus mindestens zwei Luftabnahme-Bogenlinien. Es können auch mehr als zwei Luftabnahme-Bogenlinien vorhanden sein. Jede Luftabnahme-Bogenlinie wiederum besteht aus jeweils einem Luftabnahme-Bogen und einem jeweils anschließenden Linien-Auswurfschlitz. Der Luftaufnahme-Bogen dient jeweils zu definierten Aufnahme des zugewiesenen Luftvolumenstrom-Anteils und Weiterleitung in den jeweiligen Linien-Auswurfschlitz. Dabei ist der Linien-Auswurfschlitz relativ zum Luftaufnahme-Bogen verengt oder verjüngend ausgeführt.

Dabei sind die mindestens zwei Luftabnahme-Bögen in der Weise komplementär angeordnet, als dass sie den Lüfter andererseits der Luftzuführung abdecken, wobei die mindestens zwei Luftabnahme-Bögen im Bereich der Lüfternabe voneinander wegstrebend angeordnet sind, und dabei die mindestens zwei Linien-Auswurfschlitze zueinander hinstrebend angeordnet sind, sodass die Ausbringdüse durch die gegenseitige Verlängerung der Linien-Auswurfschlitze in einer Ebene sich gegenseitig linear verlängernd geformt wird. Dies hat den Vorteil, dass die im Bereich der Lüfternabe vorhandene Blindzone eliminiert wird. Die Verwirbelungen im Bereich der Lüfternabe werden durch die oben beschriebene Ausformung des Übergangs vom Lüfter zum Düsengehäuse erreicht. Die im Bereich der Lüfternabe entstehenden ungewollten Verwirbelungen werden durch die Aufteilung in mindestens zwei Luftvolumenstrom-Anteile eliminiert und auf diese Weise wird der Luftvolumenstrom in gewünschter und definierter Weise weitergeleitet, ohne dass es zu ungewollten Verwirbelungen kommt.

Bei der erfindungsgemässen Vorrichtung handelt es sich nicht nur, wie oben beschrieben, um ein kompaktes Bauteil, sondern auch um ein leichtes Bauteil. Die Gewichtsersparnis wiederum ermöglicht es, dass die Vorrichtung horizontal oder vertikal zu einer feststehenden Säule reversibel schwenkbar oder beabstandbar ist. Die unterschiedlichen Abstände der Vorrichtungen zu der Säule ergeben sich aus der unterschiedlichen Beabstandung der Vorrichtungen zu der Säule durch mehr oder weniger ausgefahrene Stelleinrichtungen. Dabei ist es unbeachtlich, ob die Säule selbst höhenverstellbar und/oder schwenkbar ist oder ob die Vorrichtungen an der Säule höhenverstellbar und/oder schwenkbar angeordnet sind. Dies ermöglicht eine Skalierbarkeit durch die einzelnen Vorrichtungen. Dadurch kann vorteilhafterweise eine Anpassung der Arbeitshöhe an den zu besprühenden Baum vorgenommen werden.

Die erfindungsgemässen Vorrichtungen erlauben auch eine Regelung abhängig von wireless-Messstellen in der Struktur bzw. der zu bearbeitenden Kulturpflanzen. Dabei handelt es sich um Benetzungssensoren, die messen, welche Bereiche eines Baumes/einer Kulturpflanze in welcher Weise mit welcher Menge an Pflanzenschutzmittel beaufschlagt bzw. besprüht wurden und ggf. um weitere Sensoren, die eine Rückmeldung über den Verlauf und die Intensität des Luftvolumenstroms geben.

Durch das Vorsehen mehrerer erfindungsgemässer Vorrichtungen an einer oder mehrerer Säulen ist eine strukturabhängige Lüfterregelung in Segmenten möglich. Das bedeutet, dass verschiedene Bereiche beispielsweise eines Baumes, wie Krone, Stamm etc., in verschiedener Weise mit Pflanzenschutzmittel beaufschlagt bzw. besprüht werden können.

Der Lüfter kann dabei elektrisch oder durch eine andere Art von Antrieb betrieben und geregelt werden. Es ist grundsätzlich auch eine analoge Regelung denkbar. Ein Luftvolumenstrom ist vorzugsweise über die Lüfterdrehzahl einstellbar und regulierbar. Der Luftstrom dient als Trägermedium für das Pflanzenschutzmittel. Wenn dieses nicht optimal versprüht wird, dann wird über die Struktur des Baumes/der Kulturpflanze hinaus Chemie versprüht, was es zu verhindern gilt. Das Pflanzenschutzmittel soll nur dorthin gelangen, wo es der Struktur dient. Daher ist es auch so wichtig, dass der Luftvolumenstrom mess- und regulierbar ist.

Die Positionierung der Vorrichtungen kann automatisch über einen Stellmotor vertikal, beispielweise bis zu einer maximale Applikationshöhe und/oder horizontal erfolgen. Dabei können entweder nur einzelne Vorrichtungen oder alle Vorrichtungen auf einmal verstellt werden.

Die Luftzuführung ist zu einer Fahrtrichtung des Fahrzeugs luftaufnehmend angeordnet. Dadurch unterstützt der Fahrtwind den Lüfter zusätzlich. Hierdurch wiederum wird eine Energieersparnis erreicht und die maximale Luftleistung optimiert

Ausserdem ist eine Pflanzenschutzmittel-Zuführung vorgesehen, welche über einen Pflanzenschutzmittel-Einlass das Pflanzenschutzmittel in einen Mischraum zwischen dem Lüfter und der Ausbringdüse einbringt. Dabei kann die Ausbringdüse ganz oder teilweise verschlossen oder geöffnet werden, um die auszubringende Menge an Pflanzenschutzmittel zu begrenzen. Ausserdem ermöglicht das Zugeben des Pflanzenschutzmittels im Mischraum eine Dosierung des Pflanzenschutzmittels unter kontrollierbaren Bedingungen und damit auch eine Kontrolle der Luftsättigung.

Die Luftzuführung weist ferner eine Verschlussklappe auf, die mit einem Rechner in Wirkverbindung steht. Die Verschlussklappe in der Luftzuführung anzuordnen hat den Vorteil, dass die im Stand der Technik beobachteten Nachteile des Nachlaufens eines Lüfters von bis zu 15 Sekunden und damit ausgebrachtem unnötigem Pflanzenschutzmittel verhindert wird. Die Verschlussklappe schneidet den Lüfter sofort von der benötigten Luft ab, welche notwendig ist, um das im Mischraum befindliche Pflanzenschutzmittel aus der Ausbringdüse zu versprühen. Vorteilhafterweise sind Verschlussklappen oder Schnellschlussklappen eintrittsseitig derart angeordnet, dass eine Lückenschaltung möglich wird. Lückenschaltung bedeutet in diesem Zusammenhang, dass auf dem Fahrweg zwischen dem ersten und dem weiteren Baum die Vorrichtungen kein Pflanzenschutzmittel applizieren. Dies führt wiederum vorteilhafterweise dazu, dass Pflanzenschutzmittel eingespart wird.

In dem Mischraum ist ein nicht näher gezeigter Sensor vorgesehen, welcher mit dem Rechner in Wirkverbindung steht. Der Sensor dient dabei der Regelung der Menge an benötigtem Pflanzenschutzmittel durch Messen der Luftsättigung beispielsweise durch Volumen, Temperatur oder dergleichen. Ziel ist es hierbei, eine optimale Verwirbelung und Luftsättigung innerhalb des Mischraumes vorzusehen. Sollte eine ausreichende Sättigung erreicht worden sein, kann über eine nicht näher gezeigte Pflanzenschutzmittel-Rückführung überschüssiges Pflanzenschutzmittel gezielt gesammelt bzw. rückgeführt werden.

Der Rechner verarbeitet eingehende Informationen einer Kamera und/oder einer Kommunikationseinrichtung. Die Kamera arbeitet zum Beispiel nach dem Time-Of-Flight (TOF) - Prinzip und ist beispielsweise derart im Einsatz, dass ein gerade in Applikation befindlicher Baum und/oder der nächste zu applizierende Baum aufgenommen wird, um dabei Höhe, Breite und/oder Ausdehnung verschiedener Teil des Baumes zu bestimmen und dem Rechner zu übermitteln. Andere Prinzipien bzw. Sensorverfahren sind denkbar und sollen von der vorliegenden Erfindung umfasst sein. Der Rechner erhält weitere Informationen, wie Fahrtgeschwindigkeit, Windrichtung und Wetterzustände und kann somit die in jede einzelne Vorrichtung einzublasende Menge von Pflanzenschutzmittel je nach ermittelten Parametern zuweisen und entsprechend der ermittelten Parameter jeder einzelnen Vorrichtung eine unterschiedliche Positionierung zu dem Baum und/oder eine unterschiedliche Zeitdauer der Applikation von Pflanzenschutzmittel zuweisen. Damit ist jede einzelne Vorrichtung separat ansteuerbar.

Aus diesen Informationen wird auch die Lüftereinstellung (Volumenstrom und/oder Strömungsgeschwindigkeit durch Drehzahlvorgabe) für jede Vorrichtung abgeleitet. Ziel ist es, dass das Sprühmedium, also das Pflanzenschutzmittel nicht über die Struktur der Bäume/der Kulturpflanzen hinaus versprüht wird. Hierdurch wird ein Abdrift reduziert.

Der Rechner kann ausserdem die Ausbringdüse elektrisch teilweise oder ganz verschließen und wieder öffnen. Davon abgesehen ist aber auch ein manuelles, teilweises Verschließen oder Öffnen der Ausbringdüse denkbar. Damit ist eine Luftaustritts-Strömungsgeschwindigkeit über variable Schlitzgrößen einstellbar.

Die Kommunikationseinrichtung ist eine Funkstrahlen verarbeitende Einrichtung, die beispielsweise von den an den Bäumen angebrachten Sensoren Rückmeldungen erhält, ob und wie weit der Baum ausreichend mit Pflanzenschutzmittel besprüht wurde. Dabei wird eine Messung der Benetzung des jeweiligen Baumes vorgenommen und während des Benetzungsvorganges eine Anpassung des Luftvolumenstromes und/oder der Strömungsgeschwindigkeit durchgeführt. Zusätzlich zu diesen Benetzungssensoren können im Baum/in der Kulturpflanze, wie oben bereits erwähnt, auch die Sensoren zur Messung der Luftströmung vorgesehen sein. Eine Sensorkombination mit den Benetzungssensoren ist ebenfalls denkbar. Auch diese Sensoren können drahtlos arbeiten und ihre Daten so an den Rechner weitergeben, der die Ergebnisse entsprechend verarbeitet.

Bevorzugt sind vor allem die Sensoren zur Messung des Luftvolumenstroms im Zentrum des Baumes angeordnet. Durch Berechnungsalgorithmen kann berechnet werden, ob zu viel an Pflanzenschutzmittel versprüht wurde und die Chemie in Bereiche versprüht wurde, die nicht hätten besprüht werden sollen. Selbstverständlich kann eine Anbringung solcher Sensoren auch ausserhalb eines Baumes erfolgen. Dies ist jedoch aufwendig und kostenintensiv und somit nicht praktikabel.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Seitenansicht erfindungsgemässer Vorrichtungen zur Pflanzenschutzmittel-Applikation an einem Fahrzeuganhänger;
- Figur 2: eine Rückansicht der Vorrichtungen nach Figur 1 an dem Fahrzeuganhänger; und
- Figur 3: eine Schnittansicht einer der Vorrichtungen nach Figur 1;
- Figur 4: eine Ansicht von unten auf einen Lüfter 15;
- Figur 5: eine Ansicht von oben auf ein Düsengehäuse 7.3;
- Figur 6: eine Seitenansicht der Figur 5.

### Ausführungsbeispiel

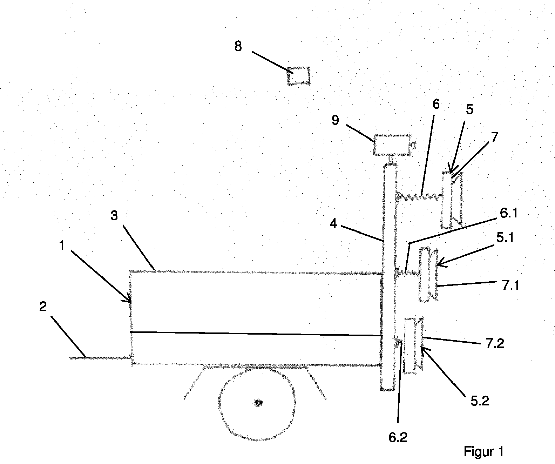

In Figur 1 ist ein Fahrzeuganhänger 1 gezeigt, an welchem fahrzeugseitig eine Anhängevorrichtung 2 zur Befestigung an einem nicht näher gezeigten Fahrzeug angeordnet ist. Weiter ist ein Pflanzenschutzmittel-Behälter 3 vorgesehen, an welchem an der dem Fahrzeug abgewandten Seite zumindest eine Säule 4 angeordnet ist.

An der Säule 4 sind untereinander drei erfindungsgemässe Vorrichtungen 5, 5.1, 5.2 in einer möglichen Gebrauchslage angeordnet. Die Vorrichtungen 5, 5.1, 5.2 können zu der Säule 4 reversibel beabstandbar und/oder schwenkbar und/oder entlang eines Pfeils 11 oder zu einem Untergrund höhenverstellbar angeordnet sein. Die unterschiedlichen Abständen der Vorrichtungen 5, 5.1, 5.2 zu der Säule 4 ergeben sich aus der unterschiedlichen Beabstandung der Vorrichtungen 5, 5.1, 5.2 zu der Säule 4 durch mehr oder weniger ausgefahrene Stelleinrichtungen 6, 6.1, 6.2. Dabei ist es unbeachtlich, ob die Säule 4 selbst höhenverstellbar und/oder schwenkbar ist oder ob die Vorrichtungen 5, 5.1, 5.2 an der Säule 4 höhenverstellbar und/oder schwenkbar angeordnet sind.

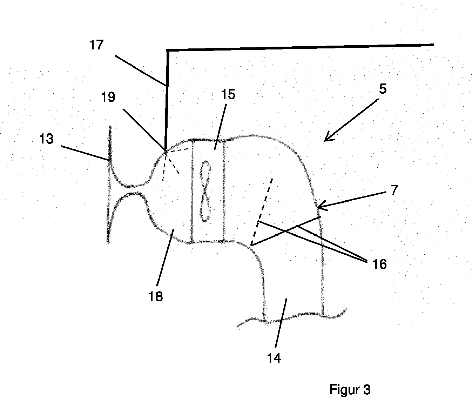

Die Vorrichtungen 5, 5.1, 5.2 dienen zur Pflanzenschutzmittel-Applikation auf Kulturpflanzen, wie Obstbäume oder dergleichen auf Obst-, Weinbau- und/oder Hopfenplantagen mittels des Fahrzeugs bzw. Fahrzeuganhängers 1. Zwischen dem Pflanzenschutzmittel-Behälter 3 und den Vorrichtungen 5, 5.1, 5.2 ist eine nicht näher gezeigte Versorgungsleitung vorhanden. Die Versorgungsleitung führt das Pflanzenschutzmittel von dem Pflanzenschutzmittel-Behälter 3 zu einem Düsengehäuse 7, 7.1, 7.2 der Vorrichtung 5, 5.1, 5.2.. Einzelheiten hierzu finden sich in Figur 3.

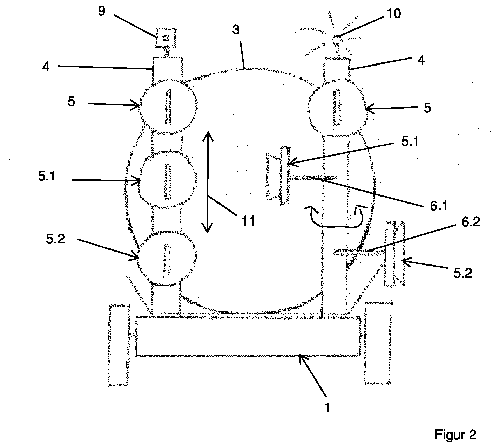

Weiter ist ein Rechner 8 gezeigt. Der Rechner 8 verarbeitet eingehende Informationen einer Kamera 9 und/oder einer in Figur 2 gezeigten Kommunikationseinrichtung 10. Die Kamera 9 arbeitet nach dem Time-Of-Flight (TOF) - Prinzip (oder einem anderen Prinzip oder Sensorverfahren) und ist beispielsweise derart im Einsatz, dass ein gerade in Applikation befindlicher Baum und/oder der nächste zu applizierende Baum aufgenommen wird, um dabei Höhe, Breite und/oder Ausdehnung verschiedener Teil des Baumes zu bestimmen und dem Rechner zu übermitteln. Der Rechner erhält weitere Informationen, wie Fahrtgeschwindigkeit, Windrichtung und Wetterzustände und kann somit die in jede einzelne Vorrichtung 5, 5.1, 5.2 einzublasende Menge von Pflanzenschutzmittel je nach ermittelten Parametern zuweisen und entsprechend der ermittelten Parameter jeder einzelnen Vorrichtung 5, 5.1, 5.2 eine unterschiedliche Positionierung zu dem Baum und/oder eine unterschiedliche Zeitdauer der Applikation von Pflanzenschutzmittel zuweisen. Damit ist jede einzelne Vorrichtung 5, 5.1, 5.2 separat ansteuerbar.

Die Kommunikationseinrichtung 10 ist eine Funkstrahlen verarbeitende Einrichtung, die beispielsweise von an den Bäumen angebrachten, nicht näher gezeigten Sensoren Rückmeldungen erhält, ob und wie weit der Baum ausreichend mit Pflanzenschutzmittel besprüht wurde.

In Figur 2 ist eine Rückansicht der Vorrichtungen 5, 5.1, 5.2 an dem Fahrzeuganhänger 1 gezeigt. Die oben gemachten Ausführungen zu Figur 1 sollen auch für die Figur 2 gelten, insbesondere dann, wenn die gleichen Bezugsziffern verwendet wurden. Ergänzend wird hier darauf hingewiesen, dass in Figur eine zweite Säule 4 gezeigt ist, an welche weitere drei Vorrichtungen 5, 5.1, 5.2 höhenverstellbar und/oder schwenkbar und/oder beabstandbar angeordnet sind.

In Figur 3 ist eine Schnittdarstellung der erfindungsgemässen Vorrichtungen 5, 5.1, 5.2 gezeigt. Die Vorrichtungen 5, 5.1, 5.2 umfassen ein Düsengehäuse 12 mit einer Ausbringdüse 13 und einer Luftzuführung 14. Weiterhin ist in dem Düsengehäuse 12 ein Lüfter 15. Dabei kann die Ausbringdüse 13 ganz oder teilweise verschlossen oder geöffnet werden, um die auszubringende Menge an Pflanzenschutzmittel zu begrenzen.

Der erfindungsgemässe Lüfter 15 ist ein herkömmlicher Fahrzeuglüfter mit einem Durchmesser von 100 bis 500 bzw. einem Umfang von 300 bis zu 1600 mm.

Die Luftzuführung 14 ist zu einer Fahrtrichtung des Fahrzeugs/Fahrzeuganhängers 1 luftaufnehmend angeordnet.

Der Lüfter 15 zwischen der Luftzuführung 14 und der Ausbringdüse 13 angeordnet. Eine Einstellung des Lüfters 15 erfolgt in Abhängigkeit von den gemessenen Parametern und Messungen in der Struktur der Bäume, wie oben beschrieben.

Eine Pflanzenschutzmittel-Zuführung 17 ist vorgesehen, welcher über einen Pflanzenschutzmittel-Einlass 19 das Pflanzenschutzmittel in einen Mischraum 18 zwischen dem Lüfter 15 und der Ausbringdüse 13 einbringt. Der Pflanzenschutzmittel-Einlass 19 ist aber schließlich nur der Halter für die konventionellen Düsenhalter.

Die Strömungsgeschwindigkeit kann und soll durch ein außen angeordnetes Klappen- oder Schiebersystem gesteuert oder geregelt werden, welches in den Figuren nicht gezeigt ist.

Die Luftzuführung 14 weist ferner eine Verschlussklappe 16 auf, wobei in Figur 3 eine gestrichelte Linie für die Verschlussklappe 16 in einer fahrtwinddurchlässigen Position und eine durchgehende Linie für die Verschlussklappe 16 in einer fahrtwindundurchlässige Position steht. Auch die Verschlussklappe 16 steht mit dem Rechner 8 in Wirkverbindung.

In dem Mischraum 18 ist ein nicht näher gezeigter Sensor vorgesehen, welcher mit dem Rechner 8 in Wirkverbindung steht. Der Sensor dient dabei der Regelung der Menge an benötigtem Pflanzenschutzmittel durch Messen der Luftsättigung beispielsweise durch Volumen, Temperatur oder dergleichen. Ziel ist es hierbei, eine optimale Verwirbelung und Luftsättigung innerhalb des Mischraumes 18 vorzusehen. Sollte eine ausreichende Sättigung erreicht worden sein, kann über eine nicht näher gezeigte Pflanzenschutzmittel-Rückführung überschüssiges Pflanzenschutzmittel gezielt gesammelt bzw. rückgeführt werden.

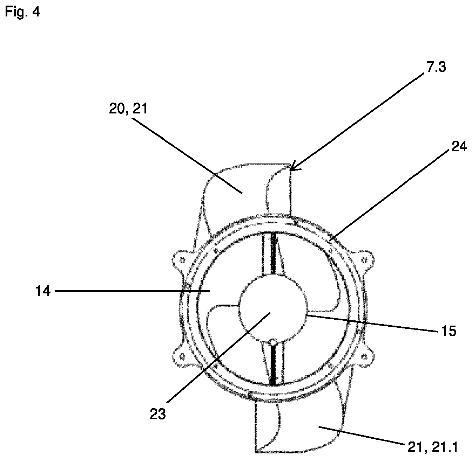

Figur 4 zeigt ein anderes erfindungsgemäßes Ausführungsbeispiel eines Düsengehäuses 7.3. Dieses Düsengehäuse 7.3 kommt in einer Vorrichtung zur Pflanzenschutzmittel-Applikation mit der Pflanzenschutzmittel-Zuführung 17, der Ausbringdüse 13 und der Luftzuführung 14 und einem mit der Luftzuführung 14 wirkverbundenen Lüfter 15 mit der Lüfternabe 23 zum Einsatz. Dabei ist das Düsengehäuse 7.3 als Abschlussteil der gesamten Vorrichtung zu betrachten. In dem Düsengehäuse 7.3 wird der von dem Lüfter 15 erzeugte Luftvolumenstrom definiert und mit der Pflanzenschutzmittel-Zuführung 17 auch mit Pflanzenschutzmittel versorgt, um anschließend zur Pflanzenapplikation aus der Vorrichtung zu verbringen. Bei der Figur 4 handelt sich um eine Ansicht von unten auf den Lüfter 15. Der Lüfter 15 ist derart angeordnet, dass die Luftzuführung 14 an den Lüfter 15 anschließt und der vom Lüfter 15 erzeugte Luftvolumenstrom anschließend durch das Düsengehäuse 7.3 an die Ausbringdüse 13 geleitet wird. Dabei sind an dem Lüfter 15 einerseits die Luftzuführung 14 und andererseits das Düsengehäuse 7.3 angeordnet.

In der Figur 4 ist der Lüfter 15 in einem Einbaurahmen 24 angeordnet. Der Einbaurahmen 24 dient der besseren und einfacheren Anbringung des Düsengehäuses 7.3 und des Lüfters 15 an einer vorgesehenen Stelle eines Fahrzeugs oder eines Fahrzeuganhängers.

Das Düsengehäuse 7.3 besteht in diesem erfindungsgemäßen Ausführungsbeispiel aus genau zwei Luftabnahme-Bogenlinien 20, 20.1.

In anderen Ausführungsbeispielen können auch mehr als zwei Luftabnahme-Bogenlinien 20, 20.1 ein anderes Düsengehäuse formen.

Die beiden Luftabnahme-Bogenlinien 20, 20.1 bestehen aus jeweils einem Luftabnahme-Bogen 21, 21.1 und einem jeweils an den Luftabnahme-Bogen 21, 21.1 anschließenden Linien-Auswurfschlitz 22, 22.1.

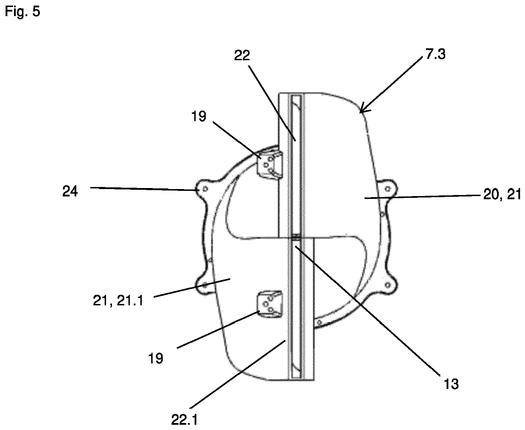

Figur 5 zeigt eine Ansicht von oben auf ein Düsengehäuse 7.3. Die Figur 4 zeigt dabei die Ansicht von unten. Die beiden Linien-Auswurfschlitze 22, 22.1 sind in Figur 5 zu erkennen. Die zwei Linien-Auswurfschlitze 22, 22.1 sind zueinander strebend angeordnet, sodass die beiden Linien-Auswurfschlitze 22, 22.1 eine gegenseitige Verlängerung formen und dabei die Ausbringdüse 13 darstellen.

Eine gegenseitige Verlängerung ist in der Figur 5 linear ausgebildet. Dies ist nicht zwingend. Es ist auch denkbar, dass die beiden Linien-Auswurfschlitze 22, 22.1 eine gebogene Form oder eine eckige Form oder eine Mischung aus gebogen, linear und eckig ausbilden können.

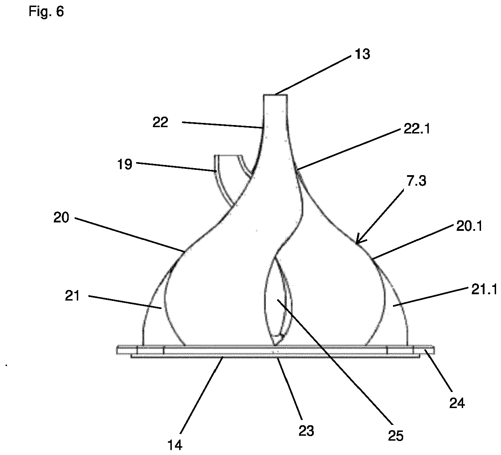

Figur 6 zeigt eine Seitenansicht der Figur 5. Dort ist gezeigt, wie die beiden Luftabnahme-Bogenlinien 20, 20.1 mittig im Einbaurahmen 24 und/oder zumindest linear über die Lüfternabe 23 hinweg angeordnet sind.

Dabei sind die beiden Luftabnahme-Bögen 21, 21.1 im Bereich der Lüfternabe 23 voneinander wegstrebend angeordnet. Dadurch entsteht zwischen den beiden Luftabnahme-Bögen 21, 21.1 ein Zwischenraum 25.

Außerdem decken die zwei Luftabnahme-Bögen 21, 21.1 komplementär den Lüfter 15 andererseits der Luftzuführung 14 ab. Komplementär bedeutet, dass der von dem Lüfter 15 erzeugte Luftvolumenstrom in zwei halbe Luftvolumenströme aufgeteilt und in die beiden Luftabnahme-Bögen 21, 21.1 weitergeleitet wird.

In den Figuren 5 und 6 ist außerdem zu erkennen, wie an den beiden Luftabnahme-Bogenlinien 20, 20.1 jeweils ein Pflanzenschutzmittel-Einlass 19 vorgesehen. Durch den jeweiligen Pflanzenschutzmittel-Einlass 19 wird das Pflanzenschutzmittel in das Innere der jeweiligen Luftabnahme-Bogenlinien 20, 20.1, eingeleitet und dort verstäubt.

Der Lüfter 15 erzeugt die notwendige Beschleunigung des Luftstroms. Durch die Anpassung der Strömungsgeschwindigkeit wird die Tröpfchengröße des Sprühmediums gesteuert oder geregelt.

**Bezugszeichenliste**

| | | | | | |
|---|---|---|---|---|---|
| 1 | Fahrzeuganhänger | 34 | | | |
| 2 | Anhängevorrichtung | 35 | | | |
| 3 | Pflanzenschutzmittel-Behälter | 36 | | | |
| 4 | Säule | 37 | | | |
| 5 | Vorrichtung | 38 | | | |
| 6 | Stelleinrichtung | 39 | | | |
| 7 | Düsengehäuse | 40 | | | |
| 8 | Rechner | 41 | | | |
| 9 | Kamera | 42 | | | |
| 10 | Kommunikationseinrichtung | 43 | | | |
| 11 | Pfeil | 44 | | | |
| 12 | | 45 | | | |
| 13 | Ausbringdüse | 46 | | | |
| 14 | Luftzuführung | 47 | | | |
| 15 | Lüfter | 48 | | | |
| 16 | Versschlussklappe | 49 | | | |
| 17 | Pflanzenschutzmittel-Zuführung | 50 | | | |
| 18 | Mischraum | 51 | | | |
| 19 | Pflanzenschutzmittel-Einlass | 52 | | | |
| 20 | Luftabnahme-Bogenlinie | 53 | | | |
| 21 | Luftabnahme-Bogen | 54 | | | |
| 22 | Linien-Auswurfschlitz | 55 | | | |
| 23 | Lüfternabe | 56 | | | |
| 24 | Einbaurahmen | 57 | | | |
| 25 | Zwischenraum | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zur Pflanzenschutzmittel-Applikation umfassend eine Pflanzenschutzmittel-Zuführung (17), einen Lüfter (15) mit einer Lüfternabe (23), und ein Düsengehäuse (7, 7.1, 7.2, 7.3) mit einer Ausbringdüse (13) und mit einer Luftzuführung (14), **dadurch gekennzeichnet, dass** der Lüfter (15) ein Fahrzeuglüfter ist und in dem Düsengehäuse (7, 7.1, 7.2) angeordnet ist.

2. Vorrichtung nach Anspruch 1, wobei der Lüfter (15) einen Durchmesser von 100 bis zu 500 mm bzw. einen Umfang von 300 bis 1600 mm aufweist.

3. Vorrichtung nach einem der vorigen Ansprüche, wobei die Luftzuführung (14) zu einer Fahrtrichtung des Fahrzeugs/Fahrzeuganhängers (1) luftaufnehmend angeordnet ist.

4. Vorrichtung nach einem der vorigen Ansprüche, wobei der Lüfter (15) zwischen der Luftzuführung (14) und der Ausbringdüse (13) angeordnet ist.

5. Vorrichtung nach einem der vorigen Ansprüche, wobei die Pflanzenschutzmittel-Zuführung (17) zwischen dem Lüfter (15) und der Ausbringdüse (13) in einem Mischraum (18) angeordnet ist.

6. Vorrichtung nach einem der vorigen Ansprüche, wobei die Luftzuführung (14) eine Verschlussklappe (16) aufweist.

7. Vorrichtung nach einem der vorigen Ansprüche, mit einer Anbringung an eine Säule (4), wobei die Vorrichtung (5, 5.1, 5.2) zu der Säule (4) reversibel beabstandbar und/oder schwenkbar und/oder höhenverstellbar angeordnet ist.

8. Vorrichtung nach Anspruch 7, wobei an der Säule (4) eine weitere Vorrichtung (5, 5.1, 5.2) vorgesehen ist.

9. Vorrichtung nach einem der vorigen Ansprüche 6 bis 8, wobei die Verschlussklappe (16) mit einem Rechner (8) in Wirkverbindung steht.

10. Vorrichtung nach Anspruch 9, wobei der Rechner (8) mit einer Kamera (9) und/oder einer Kommunikationseinrichtung (10) verbunden ist.

11. Vorrichtung nach einem der Ansprüche 7 bis 10, wobei die Säule (4) an dem Fahrzeug/Fahrzeuganhänger (1) angeordnet ist.

12. Vorrichtung nach einem der vorigen Ansprüche, wobei die Vorrichtung (5, 5.1, 5.2) und/oder jede weitere Vorrichtung (5, 5.1, 5.2) separat ansteuerbar ist/sind.

13. Vorrichtung nach einem der Ansprüche 9 oder 10, wobei ein Sensor vorgesehen ist, wobei der Sensor drahtlos mit dem Rechner (8) in Wirkverbindung steht.

14. Vorrichtung nach einem der vorigen Ansprüche 5 bis 13, wobei der Mischraum (18) eine Pflanzenschutzmittel-Rückführung aufweist.

## Claims

1. Device for an application of plant protection products, comprising a plant-protection product feed (17), a blower (15) with a blower hub (23) and a nozzle housing (7, 7.1, 7.2, 7.3) with an application nozzle (13) and with an air feed (14),
**characterised in that** the blower (15) is a vehicle blower and is arranged in the nozzle housing (7, 7.1, 7.2).

2. Device according to claim 1,
wherein the blower (15) has a diameter of 100 mm to 500 mm, respectively a circumference of 300 mm to 1,600 mm.

3. Device according to one of the preceding claims,
wherein the air feed (14) is arranged so as to take in air relative to a travel direction of the vehicle/vehicle trailer (1).

4. Device according to one of the preceding claims,
wherein the blower (15) is arranged between the air feed (14) and the application nozzle (13).

5. Device according to one of the preceding claims,
wherein the plant-protection product feed (17) is arranged between the blower (15) and the application nozzle (13) in a mixing chamber (18).

6. Device according to one of the preceding claims,
wherein the air feed (14) comprises a closing flap (16).

7. Device according to one of the preceding claims,
with an attachment to a column (4),
wherein the device (5, 5.1, 5.2) is arranged such that it can be reversibly spaced apart and/or pivoted and/or adjusted in height relative to the column.

8. Device according to claim 7,
wherein a further device (5, 5.1, 5.2) is provided on the column (4).

9. Device according to one of the preceding claims 6 to 8,
wherein the closing flap (16) is operatively connected to a computer (8).

10. Device according to claim 9,
wherein the computer (8) is connected to a camera (9) and/or to a communication device (10).

11. Device according to one of claims 7 to 10,
wherein the column (4) is arranged at the vehicle/vehicle trailer (1).

12. Device according to one of the preceding claims,
wherein the device (5, 5.1, 5.2) and/or any further device (5, 5.1, 5.2) are/is actuatable separately.

13. Device according to one of claims 9 or 10,
wherein a sensor is provided, the sensor being operatively connected to the computer (8) in wireless fashion.

14. Device according to one of the preceding claims 5 to 13,
wherein the mixing chamber (18) comprises a plant protection product re-feed.

## Revendications

1. Dispositif pour l'application d'un produit phytopharmaceutique, comprenant une alimentation de produit phytopharmaceutique (17), un ventilateur (15) ayant un moyeu-ventilateur (23) et un boîtier de buse (7, 7.1, 7.2, 7.3) ayant une buse d'épandage (13) et une alimentation d'air (14),
**caractérisé en ce que** le ventilateur (15) est un ventilateur de véhicule et est disposé dans le boîtier de buse (7, 7.1, 7.2).

2. Dispositif selon la revendication 1,
où le ventilateur (15) présente un diamètre de 100 mm à 500 mm, respectivement une circonférence de 300 mm à 1600 mm.

3. Dispositif selon l'une des revendications précédentes,
où l'alimentation d'air (14) est disposée en recevant de l'air par rapport à un sens de marche du véhicule/de la remorque-véhicule (1).

4. Dispositif selon l'une des revendications précédentes,
où le ventilateur (15) est disposé entre l'alimentation d'air (14) et la buse d'épandage (13).

5. Dispositif selon l'une des revendications précédentes,
où l'alimentation de produit phytopharmaceutique (17) est disposée entre le ventilateur (15) et la buse d'épandage (13) dans une chambre à mélange (18).

6. Dispositif selon l'une des revendications précédentes,
où l'alimentation d'air (14) comporte un volet à fermeture (16).

7. Dispositif selon l'une des revendications précédentes,
avec un attachement à une colonne (4),
où le dispositif (5, 5.1, 5.2) est disposé tel qu'il peut être réversiblement écarté et/ou pivoté et/ou réglé en hauteur par rapport à la colonne (4).

8. Dispositif selon la revendication 7,
où un autre dispositif (5, 5.1, 5.2) est pourvu sur la colonne (4).

9. Dispositif selon l'une des revendications précédentes 6 à 8,
où le volet à fermeture (16) est en liaison fonctionnelle avec un ordinateur (8).

10. Dispositif selon la revendication 9,
où l'ordinateur (8) est lié avec une caméra (9) et/ou avec un appareil de communication (10).

11. Dispositif au moins selon l'une des revendications 7 à 10,
où la colonne (4) est disposée au véhicule/à la remorque-véhicule (1).

12. Dispositif selon l'une des revendications précédentes,
où le dispositif (5, 5.1, 5.2) et/ou chaque dispositif de plus (5, 5.1, 5.2) peuvent/peut être actionné/s séparément.

13. Dispositif selon l'une des revendications 9 ou 10,
où un capteur est pourvu, le capteur étant en liaison fonctionnelle sans-fil avec l'ordinateur (8).

14. Dispositif selon l'une des revendications précédentes 5 à 13,
où la chambre à mélange (18) comprend une réalimentation de produit phytopharmaceutique.
